(19) Europäisches Patentamt
European Patent Office
Office européen des brevets

(11) **EP 1 580 223 A1**

(12) **EUROPÄISCHE PATENTANMELDUNG**

(43) Veröffentlichungstag:
28.09.2005 Patentblatt 2005/39

(51) Int Cl.$^7$: **C08K 3/34**, C08K 3/00,
C01F 7/00, C01F 7/44

(21) Anmeldenummer: 05004201.9

(22) Anmeldetag: 25.02.2005

(84) Benannte Vertragsstaaten:
**AT BE BG CH CY CZ DE DK EE ES FI FR GB GR
HU IE IS IT LI LT LU MC NL PL PT RO SE SI SK TR**
Benannte Erstreckungsstaaten:
**AL BA HR LV MK YU**

(30) Priorität: **25.02.2004 DE 102004009582
12.05.2004 DE 202004007782 U**

(71) Anmelder: **SASOL Germany GmbH
20537 Hamburg (DE)**

(72) Erfinder:
• **Diblitz, Klaus, Dr.
22869 Schenefeld (DE)**
• **Torno, Olaf
20255 Hamburg (DE)**
• **Malvschew, Alexander, Dr.
22085 Hamburg (DE)**

(74) Vertreter: **Schupfner, Georg
Müller Schupfner
Patentanwälte
Parkstrasse 1
21244 Buchholz (DE)**

(54) **Mit Böhmiten gefüllte Polymere**

(57) Die Erfindung betrifft eine Zusammensetzung enthaltend ein Polymer und einen in diesem dispergierten Füllstoff, worin der Füllstoff ein böhmitisches Tonerdehydrat mit einer Kristallitgröße von 2 bis 200 nm umfasst.

**Fig 1**

Disperal OS1 in Polyamid 6 (Bayer Durethan B29)

Kristallite:
Plättchen, Seitenansicht (PS) — · · ·
Plättchen, Draufsicht (PD) ——————
Agglomerate (A) ··········

A: 10 nm x 70 nm
PS1: 2 nm x 30 nm
PS2: 3 nm x 30 nm
PS3: 4 nm x 30 nm
PD1: 35 nm x 20 nm
PD2: 20 nm x 20 nm
PD3: 15 nm x 15 nm

**Beschreibung**

Gegenstand der vorliegenden Erfindung sind mit mineralischen Füllstoffen in Form von böhmitischen Tonerdehydraten gefüllte Polymere.

Es ist seit vielen Jahren bekannt zur Verbesserung der Materialeigenschaften von Polymeren Füllstoffe zu verwenden. Hierzu werden u.a. anorganische Salze, wie z. B. Kalziumkarbonat, Talkum, Glimmer oder Wollastonit (Gächter/Müller: Kunststoffadditive, 3. Ausgabe, S. 564 ff.) eingesetzt.

Auch der Einsatz von Aluminiumtrihydraten oder Aluminiumoxidhydroxiden (Böhmite Al(O)OH bzw. böhmitische Tonerdehydraten) als Flammschutzmittel in Polymerwerkstoffen ist z.B. aus der DE 198 12 279 C1 bzw. deren Äquivalent US 6,143,816 bekannt. Flammhemmende Wirkung entsteht durch eine aktive Wasserabgabe des eingesetzten Füllstoffs bei Erreichen einer charakteristischen Kristallphasenumwandlungstemperatur. Um einen zufriedenstellenden flammhemmenden Effekt zu bewirken, bedarf es allerdings substantieller Mengen an mineralischen Füllstoffen. Nach der DE 198 12 279 C1 werden z.B. 55 bis 75 Gew.% Böhmit eingesetzt, wobei die Böhmit-Partikel im Mittel Korndurchmesser von 0,4 bis 0,7 μm aufweisen.

Der Einsatz dieser Füllstoffe ist begrenzt, da mit zunehmender Zuschlagmenge des Füllstoffes die mechanischen Eigenschaften des Polymerwerkstoffs nachteilig verändert werden und es zu einer Versprödung kommt. Ursächlich wird diese Verschlechterung der geringen Bindung zwischen dem organischen Polymerwerkstoff und dem Füllmineral zugeschrieben.

Eine der in der Vergangenheit durchgeführten Maßnahme die Bindung zu verbessern ist die Silanisierung der Oberfläche des anorganischen Füllstoffes. Neben den durch die Silanisierung verursachten zusätzlichen Kosten traten als weiterer Nachteil die gewünschten Eigenschaftsverbesserungen der Polymerzusammensetzung nicht in dem notwendigen Maß auf.

Überraschend hat sich gezeigt, dass sich böhmitische Tonerdehydrate, welche als Pulver mit einem $d_{50}$ von 5 bis 80 μm, insbesondere etwa 40 μm, eingesetzt werden, sich zu der im Polymer erwünschten Form zerteilen lassen und in einer bestimmten Menge eingesetzt werden.

Diese lassen sich besonders vorteilhaft in Polymere einarbeiten, wobei für viele Polymere, insbesondere die unten als polar bezeichneten, keine Oberflächenmodifizierung der böhmitischen Tonerdehydrate notwendig wird. Die Teilchenform ist plättchen- oder quaderförmig und durch ein hohes Aspekt-Verhältnis (Aspect-Ratio) gekennzeichnet.

Die Erfindung betrifft somit eine Zusammensetzung enthaltend ein Polymer und einen Füllstoff, worin der Füllstoff böhmitische Tonerdehydrate umfasst,

- die böhmitischen Tonerdehydrate Kristallitgrößen von 2 bis 200 nm, vorzugsweise von 2 bis 100 nm und insbesondere 6 bis 60 nm, aufweisen,
- die böhmitischen Tonerdehydrate mittlere Partikeldurchmesser von kleiner 400, insbesondere kleiner 150 nm, in der Polymermatrix aufweisen und
- die böhmitischen Tonerdehydrate zu 0,1 bis 20 Gew. %, insbesondere 0,5 bis 8 Gew.%, in der Zusammensetzung enthalten sind,

wobei die böhmitischen Tonerdehydrate, bezogen auf die Partikel und/oder die Kristallite, insbesondere die Kristallite, aufweisen:

(a) ein mittleres Aspekt-Verhältnis von zumindest 5 : 1, vorzugsweise 10 : 1 bis 100 : 1, jeweils Länge zu Dicke in nm, und

(b) ein mittleres Aspekt-Verhältnis von Länge zu Breite von 1 : 1 bis kleiner 3 : 1, insbesondere von 1 : 1 bis kleiner 1,5 : 1.

Bevorzugte Ausführungsformen obiger Erfindung sind Gegenstand der Unteransprüche oder nachfolgend beschrieben.

Unter böhmitischen Tonerdehydraten im Sinne der Erfindung werden Böhmite und pseudoböhmitische Tonerdehydrate verstanden. Bevorzugt sind Böhmite.

Das mittlere Aspekt-Verhältnis (Länge zu Dicke) beträgt zumindest 5 : 1 vorzugsweise 10 : 1 bis 100 : 1. Unter der Länge ist die mittlere Länge der längsten Normale, welche gegenüberliegende Flächen verbindet, zu verstehen (erste Raumachse).

Unter der Dicke ist die kürzeste mittlere Länge der zwei anderen, senkrecht aufeinander stehenden längsten Raumachsen, welche ebenfalls gegenüberliegende andere Flächen verbinden, zu verstehen. Diese dritte Raumachse wird als Dicke bezeichnet.

Die zweite Raumachse, welche eine gleich lange oder eine kürzere Länge aufweist als die Länge aber eine längere als die Dicke wird nachfolgend als Breite bezeichnet. Raumachsenlängen können jeweils mittels grafischer Auswertung am TEM bestimmt werden.

Das Aspektverhältnis kann sich auf die Kristallite aber auch auf deren Agglomerate, nachfolgend als Partikel bezeichnet, beziehen, insbesondere dann, wenn die Kristallite mit entsprechendem Aspektverhältnis zu Partikeln agglomeriert sind.

Die böhmitischen Tonerdehydrate haben Kristallitgrößen von 2 bis 200 nm, vorzugsweise von 2 bis 100 nm und insbesondere 6 bis 60 nm oder auch 6 bis 40 nm, gemessen mit XRD am 120 Reflex, und werden zu 0,1 bis 20 Gew.%, insbesondere 0,5 bis 8 Gew.%, bezogen auf die Gesamtmasse des Polymers, inkl. u.a. den Füllstoffen, eingearbeitet.

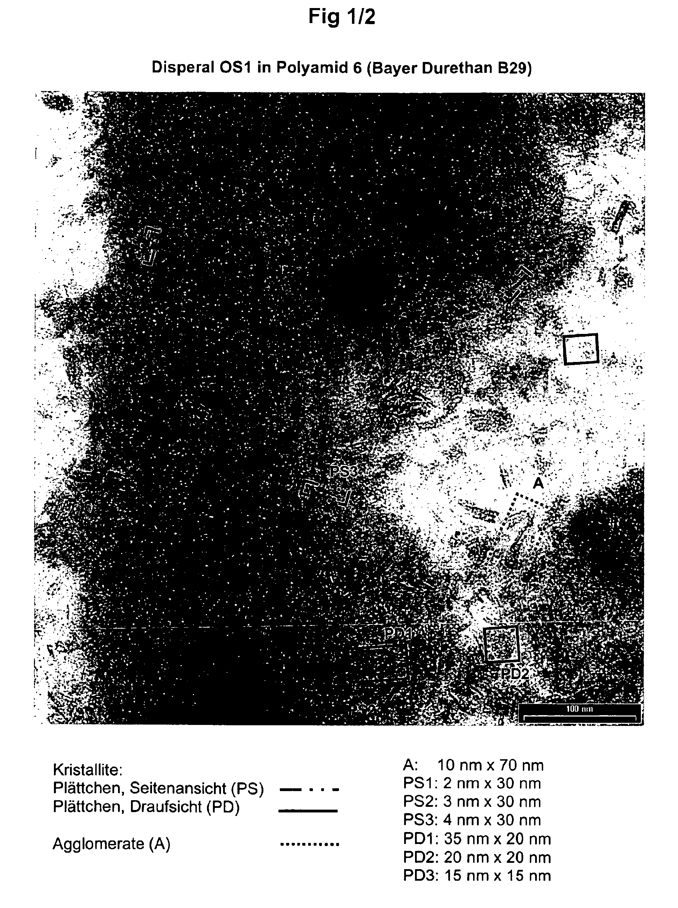

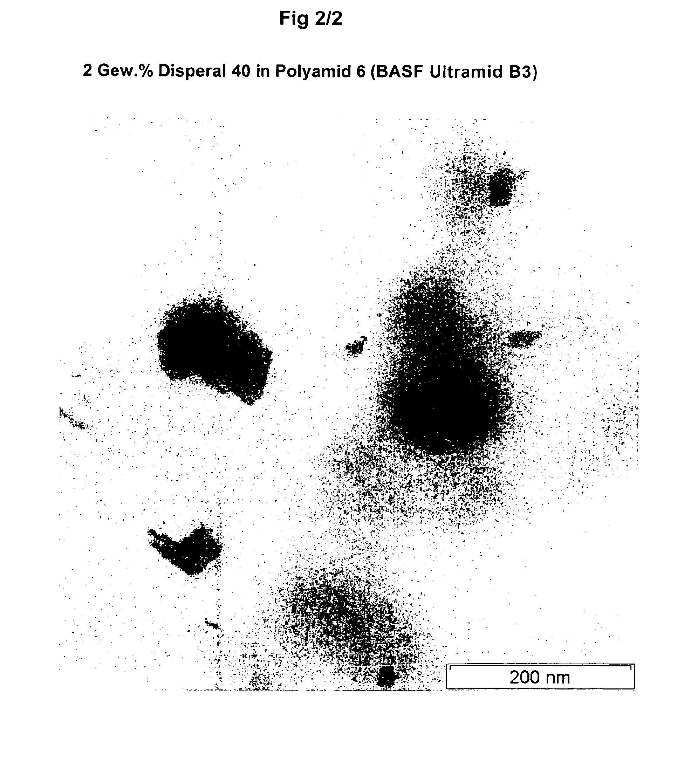

Die mittleren Teilchendurchmesser (Partikelgröße) in der Polymermatrix betragen 4 bis 400 nm, bevorzugt 20 bis 250 nm, und besonders bevorzugt 20 bis 100 nm, wobei die plättchenförmigen Teilchen ggf. aus Agglomeraten obiger Kristallite bestehen. Dies wird auch aus den Fig. 1 und 2 deutlich.

Geeignete böhmitische Tonerdehydrate sind z.B. DISPERAL® 40, DISPERAL® 60, DISPERAL® OS-1 und DISPERAL® OS-2 (Produkte und Marken der Sasol Germany GmbH). Das Aspekt-Verhältnis, Länge zu Dicke, beträgt z. B. bei DISPERAL® 40 (40 nm Länge) = 6 : 1 für DISPERAL 60 (60 nm Länge) 10 : 1. Ermittelt mittels grafischer Auswertung am TEM.

Die Oberflächenstruktur des Böhmites, welche OH-Gruppen aufweist, erleichtert das Dispergieren in polaren Polymeren. Je unpolarer das Polymer ist, desto vorteilhafter ist es, wenn weniger freie OH-Gruppen mit dem Polymer in Interaktion treten. Hierzu ist es empfehlenswert diese durch Modifikatoren zu blockieren.

Die böhmitischen Tonerdehydrate sind vorzugsweise erhältlich durch Hydrolyse von Aluminiumalkoholat - Verbindungen. Aluminiumalkoholat - Verbindungen sind Verbindungen, welche zumindest eine, vorzugsweise etwa 3, Alkoholat - Gruppen pro Aluminium-Atom, vorzugsweise mit 2 bis 12 Kohlenstoffatomen, insbesondere 4 bis 8, aufweisen, ggf. gefolgt von einer hydrothermalen Alterung von 30 min bis 20 h.

Die erfindungsgemäß eingesetzten (unmodifizierten) Tonerdehydrate sind z.B. nach dem Verfahren der DE 38 23 895-C1 zugänglich. Nach diesem Verfahren können böhmitische Tonerden mit einem mittleren Porenradius von 3 bis 100 nm durch hydrothermale Alterung einer durch Hydrolyse von Aluminiumalkoxiden erhaltenen Tonerdeaufschlämmung hergestellt werden. Durch die hydrothermale Alterung wachsen die Kristallitgrößen in den jeweiligen Raumrichtungen auf z.B. bis zu 40 nm an. Das Porenvolumen dieser böhmitischen Tonerden liegt im Bereich 0,6 bis 1,5 ml/g, insbesondere 0,6 bis 0,8 ml/g, nach Kalzinierung über z.B. zumindest drei Stunden bei 550°C.

Weitere Tonerdehydrate sind z.B. nach dem Verfahren der WO 95/12547 bzw. dem Deutschen Patent DE 43 37 643-C1 erhältlich. Hierbei handelt es sich um polar modifizierte und in Wasser dispergierbare nanokristalline Tonerdehydrate in Böhmit- bzw. Pseudoböhmitform. In Wasser dispergierbare Tonerdehydrate sind nach diesem Verfahren durch Hydrolyse von Aluminiumalkoxiden bei 30 bis 110 °C und Zugabe einer Säure (monovalente anorganische oder organische Säuren sowie deren Anhydride) sowie nachfolgende hydrothermale Alterung zugänglich.

Als organische Modifikatoren sind organische Verbindungen, welche zumindest eine Säuregruppe, insbesondere eine Sulfonsäuregruppe, und 6 bis 32 Kohlenstoffatome aufweisen, geeignet, insbesondere p-Toluol-Sulfonsäure (DISPERAL OS-1) und C10- bis C13- Alkylbenzol-Sulfonsäuren (DISPERAL OS-2). Bei der Herstellung eingesetzt sein können z.B. 0,2 bis 2 g organische Verbindung mit zumindest einer Säuregruppe, je g Tonerdehydrat, berechnet als $Al_2O_3$.

Aus der DE 199 31 204-A1 ist ein Verfahren zur Herstellung von in organischen Lösungsmitteln dispergierbaren böhmitischen Tonerdehydraten bekannt. Hiernach sind geeignete apolar modifizierte böhmitische oder pseudoböhmitische Tonerdehydrate erhältlich durch Umsetzung

(A) eines oder mehrerer Tonerdehydrate mit einer Kristallitgröße von 3 bis 100 nm, vorzugsweise 4 bis 20 nm, bestimmt mittels Röntgenbeugung am 120 Reflex, und einer Partikelgröße von kleiner 5000 nm, vorzugsweise 20 bis 1000 nm - bestimmt z.B. während des Herstellungsprozesses in Dispersion vor der Trocknung - mit

(B) einer oder mehrerer organischer Sulfonsäuren, wobei

(i) soweit die Umsetzung in einem weitgehend wäßrigen Medium erfolgt, die organische Sulfonsäure eine Mono-, Di- oder Tri- AlkylBenzolsulfonsäure ist, worin der / die Alkylreste C1- bis C6- Alkylreste sind und die organische Sulfonsäure im wäßrigen Medium löslich ist, bevorzugt sind Mono-C1-alkyl-benzolsulfonsäuren oder Mono-C3-alkyl-benzolsulfonsäuren, oder

(ii) soweit die Umsetzung in einem organischen aprotischen Lösungsmittel erfolgt, die organische Sulfonsäure zumindest 14 Kohlenstoffatome aufweist und zumindest einen aromatischen Ring aufweist,

wobei die Komponenten (A), berechnet als $Al_2O_3$, und (B) in einem Gewichtsverhältnis von 99 : 1 bis 60 : 30, vorzugsweise 98 : 2 bis 80 : 20 eingesetzt werden, sowie ggf. Trocknen.

Als Dispergiermedium kann eingesetzt sein:

(I) nicht protische / aprotische, polare, organische Lösemittel
(II) protische, polare, organische Lösemittel und/oder
(III) apolare, organische Lösemittel.

Geeignete nicht-protische, polare, organische Lösungsmittel (I) sind Ketone, Ether und Ester wie Aceton, Tetrahydrofuran (THF), Methylethylketon, Polyolester und 1,6-Hexandioldiacrylat aber auch Dimethylsulfoxid (DMSO). Geeignete protische, polare, organische, ggf. höhermolekulare, Lösungsmittel (II) sind Lösungsmittel wie Alkohole, Polyether (mit zumindest einer freien Hydroxygruppe), Hydroxyalkylester und Hydroxyalkylketone oder auch Carbonsäuren. Exemplarisch für die Alkohole seien genannt z.B. Ethylenglycol, C2- bis C8- Mono- oder Dihydroxyalkohole wie Propanole, Butanole, Pentanole und Hexanole. Geeignete apolare organische Lösungsmittel (III) sind Lösungsmittel wie Toluol und Chlorbenzol.

Die organische Sulfonsäure ist vorzugsweise eine organische Verbindung des Typs $R-SO_3H$, worin R ein alkylsubstituierter aromatischer Kohlenwasserstoffrest mit 16 bis 24 Kohlenstoffatomen ist.

Das böhmitische oder pseudoböhmitische Tonerdehydrat und die organische Sulfonsäure wird vorzugsweise bei einer Temperatur von 0 bis 140 °C, vorzugsweise bei 0 bis kleiner 90 °C, in Kontakt gebracht, insbesondere für 30 s bis 7 Tage, vorzugsweise 30 bis 90 min, und vorzugsweise unter Rühren. Das modifizierte böhmitische oder pseudoböhmitische Tonerdehydrat wird vorzugsweise durch Sprühtrocknung, Gefriertrocknung, Mikrowellentrocknung, Trocknung in überkritischen Lösungsmitteln, Filtration, Kontakttrocknung oder Trommeltrocknung getrocknet.

Das so erhaltene Pulver hat nur noch eine geringe Wasserdispergierbarkeit (< 30 Gew.%) und zeichnet sich durch eine besonders enge Korngrößenverteilung aus.

Derartige Tonerdehydrat-Pulver können zur Herstellung transluzenter Polymerfilme/-folien eingesetzt werden.

Die Ermittlung der Kristallitgrößen der erfindungsgemäßen böhmitischen Tonerden erfolgte am 120 Reflex über die allgemeine Scherrer-Formel:

$$\text{Kristallitgröße} = (K \times \text{Lambda} \times 57{,}3)/(\text{Beta} \times \cos \text{Theta})$$

K (Formfaktor): 0,992; Lambda (Wellenlänge der Röntgenstrahlung): 0,154 nm; Beta (korrigierte apparative Linienverbreiterung): reflexabhängig ; Theta : reflexabhängig. Die Messungen wurden an einem XRD-Gerät der Firma Philips Typ X'pert durchgeführt. Meßparameter: Start-Winkel [°2θ]: 5.010; End-Winkel [°2θ]: 79.990; Start d-Wert [Å]: 17.62435; End d-Wert [Å]: 1.19850; Anoden Material: Cu; α1 Wellenlänge [Å]: 1.54060; α2 Wellenlänge [Å]: 1.54439.

Als polarere Polymere können beispielsweise Polyamide und Epoxid-Harze, Nitril-Butadien-Kautschuke, Polycarbonate, Polyester, PVC, Poly(meth)acrylate oder entsprechende Copolymere bzw. Mischpolymere eingesetzt werden.

Als weitere Polymere sind insbesondere Polyolefine wie Polyethylen, Polypropylen, Polystyrol entsprechende Copolymere (auch mit Dienen) bzw. Mischpolymere zu nennen. Gleiches gilt für Ethylen-Propylen-Diene, Polybutadiene und/oder Styrol-Butadien Kautschuke. Diese werden vorliegend im Unterschied als unpolare Polymere bezeichnet.

Die erfindungsgemäßen Composites (gefüllte Polymere) können durch Polymerisation in Gegenwart der erfindungsgemäßen Füllstoffe hergestellt werden. Andererseits lässt sich das böhmitische Tonerdehydrat durch Dispergieren unter Einwirkung von Mischenergie und Scherkräften, z.B. durch Kalandrieren oder Extrudieren oder sogar Coextrusion, in die "fertige" Polymermatrix einarbeiten. Derartige böhmitische Tonerdehydrate können ohne weitere Aufbereitung als trockenes Pulver eingesetzt werden. Oft bestehen die Ausgangspartikel aus Zusammenballungen einzelner Schichten oder Kristalle, wobei die Ausgangspartikel keine geordneten Schichtstrukturen aufweisen und diese sich ohne vorherige Behandlung bzw. Interkalierung durch den Mischvorgang leicht zerteilen lassen.

Die Zusammensetzungen weisen folgende Vorteile auf. Sie führen zu überraschend schlagfesten / schlagzähen Polymeren, erhöhen die Kratzfestigkeit der Polymere, weiterhin sind gute Zugfestigkeit, thermische Beständigkeit, homogene Verteilung und gute Dispergierbarkeit zu nennen, z.B. größer 80 Gew.% des böhmtischen Tonerdehydrates sind im Polymer homogen dispergiert. Der Füllstoff ist transparent und verändert auch die Farbe des Polymers nicht. Es wurde gefunden, dass die Struktur der Kristallite / Partikel der böhmitischen Tonerde einen großen Einfluss auf wichtige physikalische Parameter, wie insbesondere die Dispergierbarkeit und die thermische Beständigkeit, der Polymerzusammensetzung hat.

Es bedarf nur eines Einsatzes geringer Mengen des Füllstoffs relativ zum Polymer. Für viele Polymere lässt sich die Schlagfestigkeit bzw. Schlagzähigkeit der Polymere gegenüber nicht-gefüllten Polymeren überraschend bereits bei geringen Zusätzen von 0,1 bis 20 Gew. %, insbesondere 0,5 bis 8 Gew.%, an böhmischem Tonerdehydrat verbessern.

Für BASF Ultramid B3 ergibt sich mit dispergiertem DISPERAL 40 eine Verbesserung des Elastizitätsmoduls um 17,6 %, während für Polypropylen Homopolymere sogar eine Zunahme um 29,3 % festgestellt werden konnte.

| BASF Ultramid B3 (Polyamid 6) | E-Modul [N/mm$^2$] |
|---|---|
| ungefüllt | 2911 |
| + 2 Gew.% DISPERAL 40 | 3425 |

| Polypropylen | E-Modul [N/mm$^2$] |
|---|---|
| ungefüllt | 1754 |
| + 5 Gew.% DISPERAL 40 | 2268 |

Der Flammschutz wird verbessert ohne Verschlechterung der mechanischen Eigenschaften des Polymers.

Ein weiterer Vorteil der Erfindung ist es, dass die böhmitischen Tonerden mit dem gewünschten Aspektverhältnis auch ohne eine größere Menge an Säure herstellbar sind, insbesondere weisen die erfindungsgemäßen böhmitischen Tonerden, wenn in Wasser dispergiert (10 g böhmitische Tonerde, bezogen auf Al$_2$O$_3$, auf 90 g Wasser), keinen pH kleiner 5 auf. Es ist bekannt, dass Säure das Polymer schädigen und aus diesem Grund Säurefänger eingesetzt werden müssen, um die Polymere zu stabilisieren. Insbesondere Polycarbonat und Polypropylen sind diesbezüglich besonders empfindlich.

**Patentansprüche**

1. Zusammensetzung enthaltend ein Polymer und einen Füllstoff, worin der Füllstoff böhmitische Tonerdehydrate umfasst,

   - die böhmitischen Tonerdehydrate Kristallitgrößen von 2 bis 200 nm aufweisen,
   - die böhmitischen Tonerdehydrate mittlere Partikeldurchmesser von kleiner 400 in der Polymermatrix aufweisen und
   - die böhmitischen Tonerdehydrate zu 0,1 bis 20 Gew. % in der Zusammensetzung enthalten sind,

   wobei die böhmitischen Tonerdehydrate, bezogen auf die Partikel und/oder die Kristallite aufweisen:

   (a) ein mittleres Aspekt-Verhältnis von Länge zu Dicke von zumindest 5 : 1 und
   (b) ein mittleres Aspekt-Verhältnis von Länge zu Breite von 1 : 1 bis kleiner 3 : 1.

2. Zusammensetzung gemäß Anspruch 1, **dadurch gekennzeichnet, dass** die böhmitischen Tonerdehydrate, bezogen auf die Partikel und/oder die Kristallite, insbesondere die Kristallite, ein mittleres Aspekt-Verhältnis Länge zu Dicke von 10 : 1 bis 100 : 1 aufweisen.

3. Zusammensetzung gemäß Anspruch 1, **dadurch gekennzeichnet, dass** die böhmitischen Tonerdehydrate, bezogen auf die Partikel und/oder die Kristallite, insbesondere die Kristallite, ein mittleres Aspekt-Verhältnis von Länge zu Breite von 1 : 1 bis kleiner 1,5 : 1 aufweisen.

4. Zusammensetzung gemäß Anspruch 1, weiterhin unabhängig **gekennzeichnet durch** zumindest eines der folgenden Merkmale:

   - die böhmitischen Tonerdehydrate weisen Kristallitgrößen von 2 bis 100 nm und insbesondere 6 bis 60 nm auf,
   - die böhmitischen Tonerdehydrate weisen mittlere Partikeldurchmesser von kleiner 150 nm in der Polymermatrix auf und /oder
   - das böhmitische Tonerdehydrat ist zu 0,5 bis 8 Gew.% in der Zusammensetzung enthalten.

5. Zusammensetzung gemäß einem der vorhergehenden Ansprüche, **dadurch gekennzeichnet, dass** das Polymer zu größer 70 Gew.%, insbesondere zu größer 80 Gew.%, in der Zusammensetzung enthalten ist.

6. Zusammensetzung gemäß einem der vorhergehenden Ansprüche, **dadurch gekennzeichnet, dass** das Polymer Polyolefine wie Polyethylen, Polypropylen, Polystyrol entsprechende Co- und/oder Terpolymere, auch mit Dienen, umfasst.

7. Zusammensetzung gemäß einem der Ansprüche 1 bis 5, **dadurch gekennzeichnet, dass** das Polymer Polycarbonate, Polyester, Polyamide, Epoxid-Harze, PVC, Poly(meth)acrylate und/oder entsprechende Copolymere umfasst.

8. Zusammensetzung gemäß einem der vorhergehenden Ansprüche; insbesondere 1 bis 6, **dadurch gekennzeichnet, dass** das böhmitische Tonerdehydrat mit einem organischen Modifikator versetzt ist, insbesondere einer organischen Verbindung, welche zumindest eine Säuregruppe, insbesondere eine Sulfonsäuregruppe, und 6 bis 32 Kohlenstoffatome aufweist.

9. Zusammensetzung gemäß Anspruch 8, **dadurch gekennzeichnet, dass** der organische Modifikator eine organische Verbindung des Typs $R-SO_3H$ ist, worin R ein alkylsubstituierter aromatischer Kohlenwasserstoffrest mit 16 bis 24 Kohlenstoffatomen ist.

10. Zusammensetzung gemäß einem der Anspruch 8 oder 9 , **dadurch gekennzeichnet, dass** der organische Modifikator mit der Tonerde zu 0,2 bis 2 g je g Tonerdehydrat, berechnet als $Al_2O_3$, in Kontakt gebracht wurde.

11. Zusammensetzung gemäß einem der vorhergehenden Ansprüche, **dadurch gekennzeichnet, dass** das böhmitische Tonerdehydrat durch Kalandrieren oder Extrudieren, in die Polymermatrix eingearbeitet ist.

12. Zusammensetzung gemäß einem der vorhergehenden Ansprüche, **dadurch gekennzeichnet, dass** das böhmitische Tonerdehydrat als Pulver mit einem $d_{50}$ von 5 bis 80 μm, insbesondere etwa 40 μm, eingesetzt wird.

13. Verwendung der böhmitischen Tonerdehydrate gemäß einem der vorhergehenden Ansprüche als Füllstoff in Polymeren zur Verbesserung des Elongations-Moduls, insbesondere bei Zusätzen von 0,1 bis 20 Gew. %, vorzugsweise von 0,5 bis 8 Gew.%.

# Fig 1/2

## Disperal OS1 in Polyamid 6 (Bayer Durethan B29)

| Kristallite: | | A: | 10 nm x 70 nm |
|---|---|---|---|
| Plättchen, Seitenansicht (PS) | — · · — | PS1: | 2 nm x 30 nm |
| Plättchen, Draufsicht (PD) | ——— | PS2: | 3 nm x 30 nm |
| | | PS3: | 4 nm x 30 nm |
| Agglomerate (A) | ·········· | PD1: | 35 nm x 20 nm |
| | | PD2: | 20 nm x 20 nm |
| | | PD3: | 15 nm x 15 nm |

## Fig 2/2

**2 Gew.% Disperal 40 in Polyamid 6 (BASF Ultramid B3)**

200 nm

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 03/089508 A (SAINT-GOBAIN CERAMICS & PLASTICS, INC; BAUER, RALPH; MIRLEY, CHRISTOPH) 30. Oktober 2003 (2003-10-30) * das ganze Dokument * ----- | 1-13 | C08K3/34 C08K3/00 C01F7/00 C01F7/44 |
| X | FR 2 797 451 A (RHODIA CHIMIE) 16. Februar 2001 (2001-02-16) * das ganze Dokument * ----- | 1-13 | |
| X | EP 1 224 150 B (MARTINSWERK GMBH; ALBEMARLE CORPORATION) 16. April 2003 (2003-04-16) * das ganze Dokument * ----- | 1-13 | |
| X | US 5 605 750 A (ROMANO ET AL) 25. Februar 1997 (1997-02-25) * das ganze Dokument * ----- | 1-13 | |
| X | EP 0 563 653 A (YOSHIDA KOGYO K.K; YKK CORPORATION) 6. Oktober 1993 (1993-10-06) * das ganze Dokument * ----- | 1-13 | |
| X | EP 0 576 695 A (ALUMINUM COMPANY OF AMERICA) 5. Januar 1994 (1994-01-05) * das ganze Dokument * ----- | 1-13 | RECHERCHIERTE SACHGEBIETE (Int.Cl.7) C08K C01F |
| X | EP 0 118 031 A (VEREINIGTE ALUMINIUM-WERKE AKTIENGESELLSCHAFT) 12. September 1984 (1984-09-12) * das ganze Dokument * ----- | 1-13 | |
| X | US 4 420 341 A (FERRIGNO ET AL) 13. Dezember 1983 (1983-12-13) * das ganze Dokument * ----- | 1-13 | |
| X | GB 1 022 944 A (CONTINENTAL OIL COMPANY) 16. März 1966 (1966-03-16) * das ganze Dokument * ----- -/-- | 1-13 | |

Der vorliegende Recherchenbericht wurde für alle Patentansprüche erstellt

| Recherchenort | Abschlußdatum der Recherche | Prüfer |
|---|---|---|
| München | 8. August 2005 | Glomm, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 05 00 4201

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,X | US 6 143 816 A (PRESCHER ET AL) 7. November 2000 (2000-11-07) * das ganze Dokument * ----- | 1-13 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| München | 8. August 2005 | Glomm, B |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 00 4201

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-08-2005

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| WO 03089508 | A | | 30-10-2003 | AU | 2003228571 | A1 | 03-11-2003 |
| | | | | BR | 0309394 | A | 09-02-2005 |
| | | | | CA | 2481475 | A1 | 30-10-2003 |
| | | | | EP | 1499666 | A1 | 26-01-2005 |
| | | | | WO | 03089508 | A1 | 30-10-2003 |
| | | | | US | 2003197300 | A1 | 23-10-2003 |
| | | | | US | 2004265219 | A1 | 30-12-2004 |
| | | | | US | 2005124745 | A1 | 09-06-2005 |
| FR 2797451 | A | | 16-02-2001 | FR | 2797451 | A1 | 16-02-2001 |
| | | | | AU | 7011900 | A | 13-03-2001 |
| | | | | BR | 0013266 | A | 09-07-2002 |
| | | | | CA | 2381705 | A1 | 22-02-2001 |
| | | | | CN | 1372583 | A ,C | 02-10-2002 |
| | | | | EP | 1203056 | A1 | 08-05-2002 |
| | | | | WO | 0112729 | A1 | 22-02-2001 |
| | | | | JP | 3628652 | B2 | 16-03-2005 |
| | | | | JP | 2003507518 | T | 25-02-2003 |
| | | | | MX | PA02001438 | A | 02-07-2002 |
| EP 1224150 | B | | 24-07-2002 | EP | 1224150 | A2 | 24-07-2002 |
| | | | | AT | 237558 | T | 15-05-2003 |
| | | | | AU | 1138401 | A | 30-04-2001 |
| | | | | CA | 2385320 | A1 | 26-04-2001 |
| | | | | DE | 60002228 | D1 | 22-05-2003 |
| | | | | DE | 60002228 | T2 | 05-02-2004 |
| | | | | HU | 0300643 | A2 | 28-06-2003 |
| | | | | JP | 2003512279 | T | 02-04-2003 |
| | | | | US | 6827923 | B1 | 07-12-2004 |
| | | | | WO | 0128926 | A2 | 26-04-2001 |
| | | | | ES | 2197121 | T3 | 01-01-2004 |
| US 5605750 | A | | 25-02-1997 | GB | 2308553 | A ,B | 02-07-1997 |
| EP 0563653 | A | | 06-10-1993 | JP | 2887023 | B2 | 26-04-1999 |
| | | | | JP | 5279019 | A | 26-10-1993 |
| | | | | DE | 69307939 | D1 | 20-03-1997 |
| | | | | DE | 69307939 | T2 | 28-08-1997 |
| | | | | EP | 0563653 | A1 | 06-10-1993 |
| | | | | KR | 9705189 | B1 | 14-04-1997 |
| | | | | US | 5306680 | A | 26-04-1994 |
| | | | | US | 5401703 | A | 28-03-1995 |
| EP 0576695 | A | | 05-01-1994 | AU | 649846 | B2 | 02-06-1994 |
| | | | | CA | 2072672 | A1 | 30-12-1993 |
| | | | | US | 5182410 | A | 26-01-1993 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT
ÜBER DIE EUROPÄISCHE PATENTANMELDUNG NR.**

EP 05 00 4201

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-08-2005

| Im Recherchenbericht angeführtes Patentdokument | | Datum der Veröffentlichung | Mitglied(er) der Patentfamilie | | Datum der Veröffentlichung |
|---|---|---|---|---|---|
| EP 0576695 | A | | EP | 0576695 A1 | 05-01-1994 |
| | | | AU | 1849992 A | 06-01-1994 |
| | | | DE | 69231292 D1 | 31-08-2000 |
| | | | DE | 69231292 T2 | 22-02-2001 |
| EP 0118031 | A | 12-09-1984 | DE | 3308023 A1 | 13-09-1984 |
| | | | AT | 23355 T | 15-11-1986 |
| | | | DE | 3461195 D1 | 11-12-1986 |
| | | | EP | 0118031 A1 | 12-09-1984 |
| | | | JP | 59168041 A | 21-09-1984 |
| US 4420341 | A | 13-12-1983 | KEINE | | |
| GB 1022944 | A | 16-03-1966 | BE | 670286 A | 17-01-1966 |
| | | | CH | 448982 A | 31-12-1967 |
| | | | DE | 1467260 A1 | 13-03-1969 |
| | | | FR | 1409781 A | 03-09-1965 |
| | | | JP | 49044877 B | 30-11-1974 |
| | | | NL | 6407784 A | 12-01-1965 |
| US 6143816 | A | 07-11-2000 | DE | 19812279 C1 | 12-05-1999 |
| | | | EP | 0943647 A1 | 22-09-1999 |
| | | | HU | 9900705 A2 | 28-10-1999 |
| | | | JP | 3105496 B2 | 30-10-2000 |
| | | | JP | 11323011 A | 26-11-1999 |
| | | | NO | 990290 A | 21-09-1999 |
| | | | SK | 31699 A3 | 13-03-2000 |

EPO FORM P0461

Für nähere Einzelheiten zu diesem Anhang : siehe Amtsblatt des Europäischen Patentamts, Nr.12/82